# DEMANDE DE BREVET EUROPEEN

(11) **EP 1 942 298 A1**
(43) Date de publication de la demande: **09.07.2008**
(21) Numéro de dépôt: 07291572.1
(22) Date de dépôt: 18.12.2007
(51) Int. Cl.: F16L 55/1645, B05D 7/22

(54) **Baudruche extensible de restructuration de revêtement interne**

(30) Priorité: 05.01.2007 FR 0700087
(71) Demandeur: IFP, 92852 Rueil-Malmaison Cédex (FR)
(72) Inventeur: Gautreau, Nicolas, 78360 Montesson (FR); Charron, Yves, 91310 Longpont-sur-Orge (FR)

(57) **Abrégé**

L'invention concerne un procédé de restructuration de la surface interne (3) d'un tube (2) de grande longueur qui comprend les étapes suivantes :
- Fabrication d'une baudruche de restructuration (1) dans un matériau à taux d'expansion supérieur à 50 %,
- Extension longitudinale de la baudruche jusqu'à la longueur requise pour le tube ;
- Introduction de la baudruche étendue longitudinalement (1') dans le tube à restructurer (2) ;
- Expansion radiale de la baudruche (1") pour effectuer la restructuration.

L'invention concerne également une baudruche extensible longitudinalement pour la restructuration de la surface d'un revêtement interne de tubes constituant une conduite de transport de gaz ou de liquide.

## Description

### Domaine technique de l'invention

L'invention concerne la restructuration de la surface du revêtement interne d'un tube, notamment d'une canalisation constituant une conduite de transport de gaz ou de liquide, au moyen de baudruches de restructuration.

### Art antérieur

Dans la suite de la description on entend par "restructuration d'une surface" soit :
- l'ultra lissage d'une surface qui a la propriété de réduire la traînée aérodynamique d'une paroi par rapport à une surface rugueuse,
- la structuration d'une surface : les surfaces structurées conventionnelles se présentent sous la forme de rainures alignées dans la direction de l'écoulement. Elles ont la propriété, entre autres, de réduire, par rapport à une surface lisse, la traînée aérodynamique le long d'une paroi. Cette propriété résulte d'une atténuation, dans la direction transverse à l'écoulement, des fluctuations de vitesse et, par conséquent, de la composante correspondante de la turbulence.

Les surfaces structurées peuvent être bidimensionnelles ou tridimensionnelles.

Les structures bidimensionnelles présentent une hauteur constante dans la direction de l'écoulement, leurs dimensions variant seulement dans la direction transversale. Les structures bidimensionnelles de l'art antérieur (usuellement appelées "riblets", de l'anglais "riblet" : "petite nervure") peuvent présenter des formes a - triangulaire, b - semi circulaire, c - trapézoïdale et d - lame de couteau.
Les surfaces tridimensionnelles peuvent être représentées par exemple par des segments de disques dans la direction de l'écoulement (Bechert, 1987), des formes obéissant à une distribution fractale (US 4 650 138 et US 4 759 516) ou des structures en chevrons (EP 0 543 647 A1).

On entend par "baudruche de restructuration" un ballon (une enceinte fermée) ou une membrane (une enceinte ouverte) élastiques, augmentant de volume sous l'effet de la pression et pouvant épouser la forme de l'objet à restructurer.

L'objectif de la restructuration de surface est de modifier l'état de surface, pour obtenir:
- soit des surfaces ultra lisses;
- soit des surfaces structurées.

La modification de l'état de surface permet une réduction des pertes de charges, avantageuse dans le cas de revêtements internes de tubes constituant une conduite de gaz ou de liquide. L'ultralissage permet par ailleurs de réduire le coefficient de friction, le dépôt des sels et des paraffines dans les tubes de production, le nombre des interstices et des trous résultant d'un dépôt de matière avec une épaisseur de matière insuffisante.

Le brevet FR 2.879.948 décrit un dispositif et procédé de réalisation de surfaces restructurées dans des conduites en vue de réduire la traînée aérodynamique au moyen d'une baudruche de restructuration dont la surface externe est lisse ou comporte des structurations.

Il a été recherché un moyen de mettre en oeuvre une baudruche pour la restructuration de la surface d'un revêtement interne de tubes de grandes dimensions constituant par exemple une conduite de transport de gaz ou de liquide en vue de la réduction des pertes de charge dans cette conduite. Cependant la fabrication de telles membranes pour la mise en place de baudruches de restructuration de revêtements internes de tubes pose de nombreux problèmes liés à leur forme parfois complexe (notamment dans le cas de baudruches biconiques), mais également à leurs grandes dimensions et à l'empreinte de restructuration qui doit être conforme à l'état de surface structurée ou ultra-lisse requis pour le revêtement. En effet, dans le cas par exemple des tubes de transport de gaz, leur longueur est d'environ 12 m, par conséquent :
- fabriquer une baudruche de grande longueur demande un outillage complexe et très coûteux, notamment en ce qui concerne la taille du moule ;
- faire supporter une baudruche de grande longueur sur une poutre montée en porte à faux demande une poutre de forme complexe (diamètre étagé), volumineuse, lourde et équilibrée par un contre poids d'un moment équivalent exercé par celui de la poutre.

### Description de l'invention

La présente invention propose de mettre en oeuvre une baudruche extensible longitudinalement pour la restructuration de surface d'un revêtement interne de tubes de grandes dimensions.

### Résumé

L'invention concerne un procédé de restructuration de la surface interne (3) d'un tube (2) de grande longueur qui comprend les étapes suivantes :
- Fabrication d'une baudruche de restructuration (1) dans un matériau à taux d'expansion supérieur à 50 %,
- Extension longitudinale de la baudruche jusqu'à la longueur requise pour le tube ;
- Introduction de la baudruche étendue longitudinalement (1') dans le tube à restructurer (2) ;
- Expansion radiale de la baudruche (1") pour effectuer la restructuration.

De préférence, l'expansion radiale est effectuée par mise sous pression de la baudruche.

On peut effectuer le retrait et le pelage de la baudruche par diminution de la pression.
On peut effectuer le retrait et le pelage de la baudruche par diminution de l'expansion axiale.
De préférence, le taux d'expansion du matériau de la baudruche est supérieur à 100 %, de manière très préférée 300% et de manière encore plus préférée supérieur à 600%.
Dans un mode de réalisation, on introduit un revêtement interne à l'intérieur du tube avant l'introduction de la baudruche.
Avantageusement, l'état de surface de la baudruche avant extension est défini en fonction des extensions longitudinale et radiale qui seront exercées sur la baudruche et de l'état de surface requis de la baudruche après extension.
Dans un mode de réalisation, l'état de surface requis est ultra lisse.
Dans un autre mode de réalisation, l'état de surface requis est un état de surface structuré de manière bi ou tridimensionnelle.
De préférence, le tube constitue une conduite de transport de gaz ou de liquide.

L'invention concerne également une baudruche extensible longitudinalement pour la restructuration de la surface d'un revêtement interne de tubes constituant une conduite de transport de gaz ou de liquide.
De préférence, le matériau de la baudruche a un taux d'expansion supérieur à 50 %.
Avantageusement, le matériau de la baudruche est à base de silicone.
Dans un mode de réalisation, la surface externe de la baudruche présente un état de surface ultra-lisse.
Dans un autre mode de réalisation, la surface externe de la baudruche présente un état de surface structuré de manière bi ou tridimensionnelle.

### Description détaillée de l'invention

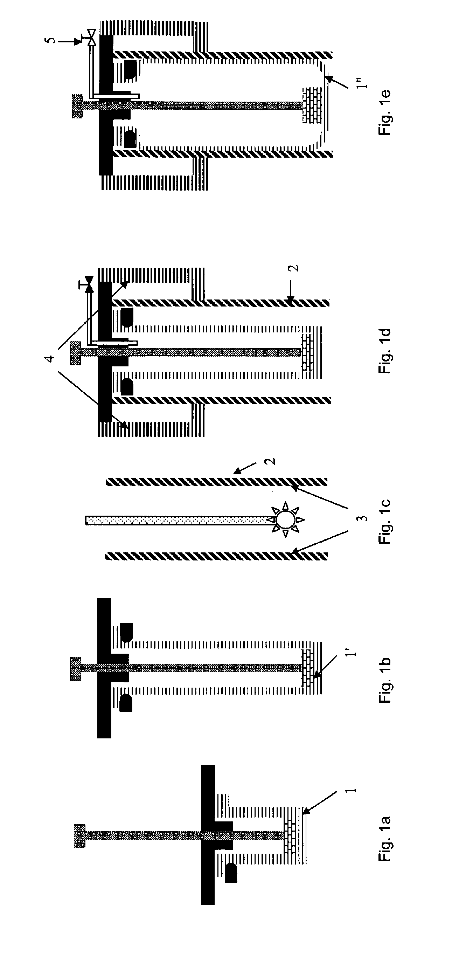

Les figures 1a, 1b, 1c, 1d, 1e représentent plusieurs étapes du procédé de restructuration du revêtement interne d'un tube au moyen d'une baudruche de restructuration extensible selon l'invention.
Figure la : Vue en coupe de la baudruche de restructuration avant extension longitudinale et pressurisation interne (état initial 1).
Figure 1b : Vue en coupe de la baudruche de restructuration expansée longitudinalement (état étendu longitudinalement 1').
Figure 1c : Vue en coupe d'un tube au cours de l'application d'un revêtement interne (depôt par spray, injection, poudrage, trempage...).
Figure 1d : Vue en coupe du tube à restructurer intérieurement équipé de la baudruche étendue longitudinalement selon l'invention.
Figure 1e : Vue en coupe du tube équipé de la baudruche gonflée et mise sous pression (état étendu longitudinalement, expansé radialement et pressurisé 1").

### Description des figures

Les figures 1a à 1e décrivent de manière non limitative un procédé de restructuration de surface d'un revêtement interne de tubes de grandes dimensions au moyen d'une baudruche de restructuration selon l'invention qui comprend les étapes suivantes :
a) Fabrication d'une baudruche de restructuration (1) dont l'état de surface en l'état initial est défini en fonction de l'extension longitudinale qui sera exercée sur la baudruche et de l'état de surface final requis pour la baudruche étendue longitudinalement (Fig.1a). La fabrication est effectuée par tout moyen connu de l'homme du métier, par exemple dans un moule pour baudruche en silicone et démoulage par divers procédés, par exemple : lubrifiant, cire perdue, moule démontable constitué de plusieurs pièces.
b) Extension longitudinale de la baudruche en fonction de la longueur de restructuration du tube requise : baudruche étendue (1') (Fig. 1b).
c) Introduction éventuelle d'un revêtement (3) dans le tube à restructurer (2), déposé à froid: bases époxydiques sous formes solvantées (phénoliques), phase aqueuse, ou sans solvant, bases polyuréthanne, PVC, ou déposé à chaud : Polyamide, époxy ou PVC, à l'intérieur du tube, si le tube n'est pas déjà revêtu d'un revêtement interne structurable (Fig.1c).
d) Mise en place de la baudruche (1') à l'intérieur du tube à restructurer et amarrage des supports de centrage (4) extérieurement au tube (Fig. 1d).
e) Gonflage et mise sous pression de la baudruche au moyen d'une vanne (5) ou expansion radiale par tout autre moyen connu de l'homme du métier afin de réaliser l'étape de restructuration du revêtement interne (Fig. 1 e) : baudruche étendue longitudinalement et expansée radialement (1").
f) Dégonflage ou retrait et pelage de la baudruche par actions successives et/ou simultanées de réduction de la pression et de l'expansion axiale.
g) Désolidarisation des supports extérieurs et retrait de la baudruche.

Les moyens d'expansion radiale peuvent être par exemple portés sur un arbre dont le déplacement longitudinal selon l'axe principal du tube permet l'application de la baudruche étendue sur toute la longueur du tube. Les moyens d'expansion radiale peuvent être un ensemble élastique de forme torique de façon à pouvoir appliquer une pression la plus régulière possible sur une circonférence interne de la conduite, par exemple une chambre en anneau, pressurisée ou en matériau souple, qui est déplacée par glissement le long de la surface interne de la baudruche. On peut aussi envisager un ensemble de coussins, ou roues, répartis sur une circonférence et comprenant des moyens d'application radiale d'une force de pression sur la baudruche, soit mécaniques, soit pneumatiques. Tout autre moyen connu de l'homme du métier peut également convenir.

Le matériau constituant la baudruche peut être tout produit ou toute matière ayant de bonnes propriétés de réplique, une faible adhérence et un fort taux d'expansion. On entend par fort taux d'expansion un taux d'expansion voisin de 50 % ; de préférence voisin de 100 %, de manière très préférée voisin de 300% ; et de manière encore plus préférée voisin de 600%.

Comme exemples de produits pouvant être utilisés pour la membrane de la baudruche, on peut notamment citer les élastomères ayant un fort taux d'expansion, notamment le caoutchouc, les silicones, ...., ou les matériaux de type KRATON TM seuls ou en mélanges.

Certains silicones ont un taux d'expansion supérieur à 600%. Le matériau préféré pour la baudruche est à base de silicone.

La membrane de la baudruche peut comprendre des matériaux de renfort pour permettre d'améliorer la résistance de la membrane lors de l'extension longitudinale.

Le procédé selon l'invention peut être utilisé pour la restructuration de tubes internes comprenant des revêtements déposés à froid, notamment: bases époxydiques sous formes solvantées (phénoliques), phase aqueuse, ou sans solvant, bases polyuréthanne, PVC.
Le procédé selon l'invention peut également être utilisé pour la restructuration de revêtements déposés à chaud, notamment du type polyamide, époxy ou PVC.
La membrane présente sensiblement la même rugosité que celui du moule compte tenu d'une capacité de réplique (mouillabilité) de la matière en phase liquide supérieure à la finesse de la rugosité (hauteur des déformations) du moule.
Le moule est réalisé avec un état de surface supérieur (hauteur de rugosité inférieure) à celui des revêtements internes déposés de façon conventionnelle. L'état de surface est choisi à la limite supérieure du seuil de sensibilité du facteur de friction.
Ainsi la rugosité :
- d'un revêtement interne déposé de façon conventionnelle est de l'ordre de 10 à 20 µm (moyenne sur 5 échantillons des écarts pic à pic des déformations de surface : Ry5)
- d'un moule primaire (verre, acier rodé...) est de l'ordre de 1 µm (Ry5)
- de la surface de la membrane répliquée (moule secondaire) est de l'ordre de 1 µm (Ry5)
- de la surface du revêtement répliqué (moule tertiaire) par la membrane est très inférieure à celle de la membrane (moule secondaire)
- seuil de sensibilité du facteur de friction de l'ordre de 1 µm.

### Avantages de l'invention

L'intérêt de la méthode est de permettre une mise en place facile de baudruches afin de restructurer des surfaces de revêtement interne de tubes de grande longueur, tout en maintenant un très bon état de surface.
En effet, outre la simplification due à la mise en oeuvre d'une baudruche de taille inférieure à celle du tube comportant le revêtement à restructurer, le retrait de la baudruche est également facilité :
- Le pelage de la membrane est facilité par un tendu longitudinal élevé (force axiale élevée).
- Le pelage de la membrane est facilité par les actions alternées sur la dépressurisation de la membrane et la diminution de l'expansion axiale.

Par ailleurs, le procédé selon l'invention permet d'obtenir des états de surface de grande qualité pour le revêtement interne.
En effet, les expansions longitudinale et radiale font diminuer la hauteur des protusions de surface (rugosité) sensiblement proportionnellement au produit des taux d'expansion longitudinal et radial.
De même, les expansions longitudinale et radiale font augmenter la distance entre les protusions sensiblement proportionnellement au produit des taux d'expansion longitudinal et radial.

En ce qui concerne la rugosité :
- la rugosité physique (mesurée au rugosimètre) se trouve diminuée sensiblement proportionnellement au produit des taux d'expansion longitudinal et radial ;
- la rugosité hydraulique (équivalente au facteur de friction) se trouve diminuée sensiblement proportionnellement au carré du produit des taux d'expansion longitudinal et radial.

## Revendications

1. Procédé de restructuration de la surface interne (3) d'un tube (2) de grande longueur qui comprend les étapes suivantes :
- Fabrication d'une baudruche (1), dans un matériau à taux d'expansion supérieur à 50 %, dont la surface externe comporte une empreinte de restructuration déterminée de façon à tenir compte des extensions longitudinales et radiales que va subir la baudruche, et en fonction de l'état de surface final désiré pour le tube à restructurer;
- Extension longitudinale de la baudruche jusqu'à la longueur requise pour le tube ;
- Introduction de la baudruche étendue longitudinalement (1') dans le tube à restructurer (2) ;
- Expansion radiale de la baudruche (1") pour effectuer la restructuration.

2. Procédé de restructuration selon la revendication 1 dans lequel l'expansion radiale est effectuée par mise sous pression de la baudruche.

3. Procédé de restructuration selon la revendication 2 dans lequel on effectue le retrait et le pelage de la baudruche par diminution de la pression.

4. Procédé de restructuration selon l'une des revendications 1 à 3 dans lequel on effectue le retrait et le pelage de la baudruche par diminution de l'expansion axiale.

5. Procédé de restructuration selon l'une des revendications précédentes dans lequel le taux d'expansion du matériau de la baudruche est supérieur à 100 %.

6. Procédé de restructuration selon la revendication 5 dans lequel le taux d'expansion du matériau de la baudruche est supérieur à 300 %.

7. Procédé de restructuration selon la revendication 6 dans lequel le taux d'expansion du matériau de la baudruche est supérieur à 600%.

8. Procédé de restructuration selon l'une des revendications précédentes dans lequel on introduit un revêtement interne à l'intérieur du tube avant l'introduction de la baudruche.

9. Procédé de restructuration selon l'une des revendications précédentes dans lequel l'état de surface requis de la baudruche après extension est ultra lisse et permet de définir, avec les extensions longitudinale et radiale qui seront exercées sur la baudruche, l'état de surface de la baudruche avant extension.

10. Procédé de restructuration selon l'une des revendications précédentes dans lequel l'état de surface requis de la baudruche après extension est un état de surface structuré de manière bi ou tridimensionnelle et permet de définir, avec les extensions longitudinale et radiale qui seront exercées sur la baudruche, l'état de surface de la baudruche avant extension.

11. Procédé de restructuration de la surface d'un revêtement interne de tube selon l'une des revendications 1 à 10 dans lequel le tube constitue une conduite de transport de gaz ou de liquide.

12. Baudruche extensible longitudinalement en matériau à taux d'expansion supérieur à 50 %, pour la restructuration de la surface d'un revêtement interne de tubes constituant une conduite de transport de gaz ou de liquide, dont la surface externe comporte une empreinte de restructuration déterminée de façon à tenir compte des extensions longitudinales et radiales que va subir la baudruche, et en fonction de l'état de surface final désiré pour le tube à restructurer.

13. Baudruche selon la revendication 12 dans laquelle le matériau de la baudruche est à base de silicone.

14. Baudruche selon l'une des revendications 12 à 13 dans laquelle la surface externe de la baudruche présente un état de surface ultra-lisse.

15. Baudruche selon l'une des revendications 12 à 13 dans laquelle la surface externe de la baudruche présente un état de surface structuré de manière bi ou tridimensionnelle.
